# EUROPEAN PATENT SPECIFICATION

(11) **EP 2 575 408 B1**
(45) Date of publication and mention of the grant of the patent: **30.10.2019**
(21) Application number: 12005672.6
(22) Date of filing: 03.08.2012
(51) Int. Cl.: H04W 76/14, H04W 4/80

(54) **Single NFC device identity selection on a multiple-identity supported device**
Einzelne NFC-Vorrichtungs-Identitätsauswahl bei einer mehrfachidentitätsunterstützten Vorrichtung
Sélection d'identité de dispositif NFC unique sur un dispositif supporté par des identités multiples

(30) Priority: 29.09.2011 US 201113248863
(43) Date of publication of application: 03.04.2013
(73) Proprietor: Avago Technologies International Sales Pte. Limited, Singapore 768923 (SG)
(72) Inventor: Faithorn, Nick, Cheltenham, GL52 8RP (GB)
(74) Representative: Bosch Jehle Patentanwaltsgesellschaft mbH

(56) References cited:
- EP-A1- 1 837 781
- EP-A1- 2 221 984
- WO-A1-2006/016323
- GB-A- 2 476 989
- US-A1- 2011 136 429

## Description

### BACKGROUND

### Field of Invention

The invention relates to near field communications (NFC), and more specifically to maintaining a list of multiple targets emulated on a multiple-identity NFC device and selecting a proper identity from the list in response to a polling command.

EP 1837781 discloses a method, a device and a system supporting an automated selection of data records comprising payment and electronic ticket related information for being provided by an identification means, wherein obtained context information allow for selecting automatically one suitable data record out of said plurality of data records to be provided by the identification means, which operated for example as a radio frequency identification (RFID) transponder to an external identification means, which operated for example as a radio frequency implemented for instance in a point of sales, a cash box and/or a ticket checkpoint.

GB 2476989 discloses a mobile computing device transmitting authentication data to an authentication tag and stored as an NFC definition record, which is validated by the device. If the data is valid, the device executes a secure function such as launching a secure application, which may be associated with an application-ID held in second authentication data from the tag. The secure application may be an account access application, e.g., a mobile wallet, and communicates with a remote server to update account details such as virtual bank cards.

### Related Art

Personal applications have gone beyond the deskbound model of interacting with a computer to a model wherein computing and communication hardware are truly personal items, are highly mobile, and are integrated into the fabric of modern living. Consistent with this usage model for powerful personal computational and communication devices, many applications of "on-the-go" computing and communication have been, and are being, developed. One class of such on-the-go applications involves NFC between devices. Applications such as conducting financial transactions with stores, banks, trains, busses, and so on may be facilitated by the near-field coupling of two devices to exchange financial and/or personal information.

Conventionally, each target is associated with a single device, such as a smart card, that has a single identity. This identity could be a mass transit ticket, a credit card, official identification, access permission, or any other identity available. However, people typically have multiple identities, such as multiple credit cards to provide an example. It would be beneficial to associate these multiple identities with a single device instead of having numerous single identity devices.

What is needed is an apparatus and method to receive a polling command at a NFC device that supports multiple identities, selects the proper identity from a list of identities, and proceeds with establishing a link between the NFC reader and the multiple-identity NFC device.

### BRIEF SUMMARY OF THE INVENTION

The present invention relates to a device according to claim 1 and to a corresponding method according to claim 14.

According to an aspect of the invention, a Near Field Communication (NFC)-enabled device comprises:
a demodulator configured to extract a polling command from a polling signal received from a NFC device, the polling command including a characteristic;
a memory configured to store a list of a plurality of NFC targets; and
a processor configured to search the list to select a first NFC target from among the plurality of NFC targets that matches a characteristic included in the polling command.

Advantageously, the plurality of NFC targets comprises an electronic ticket, a credit card, or identification.

Advantageously:
the electronic ticket comprises a bus ticket, an airplane ticket, a mass transit ticket, or a parking ticket;
the credit card comprises a card issued by a merchant, bank, or credit agency; and
the identification comprises a government-issued identification.

Advantageously, the characteristic is a format of the polling command.

Advantageously, the format of the polling command complies with a Type A NFC standard;
a Type B NFC standard, wherein the polling command comprises an application family identifier that indicates the characteristic that the NFC device targets;
a Type F NFC standard, wherein the polling command comprises a system code that indicates the characteristic that the NFC device targets; or
a Vicinity standard, wherein the polling command comprises an application family identifier that indicates the characteristic that the NFC device targets.

Advantageously, the characteristic is an electronic ticket, wherein the electronic ticket comprises a bus ticket, an airplane ticket, a mass transit ticket, or a parking ticket.

Advantageously, the characteristic is a credit card, wherein the credit card comprises a card issued by a merchant, bank, or credit agency.

Advantageously, the characteristic is a loyalty card, wherein the loyalty card comprises a card issued by a merchant.

Advantageously, the characteristic is an identity restriction, wherein the identity restriction comprises a restriction on which emulated target may be selected depending on a time of day, or a restriction on which emulated target may be selected depending on a Global Positioning System (GPS) location.

Advantageously, the characteristic is a financial restriction, wherein the financial restriction comprises a restriction on which emulated target may be selected for a financial transaction above or below a user-defined amount.

Advantageously, the characteristic is an identification, wherein the identification comprises a government-issued identification.

Advantageously, the processor is further configured to select a NFC target that matches a plurality of characteristics included in the polling command.

Advantageously, the NFC-enabled device is a mobile device such as a mobile phone, tablet computer, or laptop computer.

According to an aspect, a method for selecting a Near Field Communication (NFC) target comprises:
emulating a plurality of NFC targets on a first NFC device;
receiving a polling command from a second NFC device;
searching a list of the plurality of NFC targets on the first NFC device for a NFC target that matches a characteristic of the polling command; and
selecting the NFC target in the list that first matches the characteristic.

Advantageously, the method further comprises:
extracting the characteristic that is encoded in the polling command that identifies a type of NFC target requested by the second NFC device; and
sending a response to the second NFC device that identifies the first NFC device as the NFC target selected from the list that first matches the characteristic.

Advantageously, the characteristic is a format of the polling command.

Advantageously, the format of the polling command complies with a Type A NFC standard;
a Type B NFC standard, wherein the polling command comprises an application family identifier that indicates the characteristic that the NFC device targets;
a Type F NFC standard, wherein the polling command comprises a system code that indicates the characteristic that the NFC device targets; or
a Vicinity standard, wherein the polling command comprises an application family identifier that indicates the characteristic that the NFC device targets.

Advantageously, the characteristic is an identity restriction that comprises a restriction on which NFC target may be selected depending on a time of day, or a restriction on which NFC target may be selected depending on a Global Positioning System (GPS) location.

Advantageously, the characteristic is a financial restriction that comprises a restriction on which NFC target may be selected for a financial transaction above or below a user-defined amount.

Advantageously, the first NFC device is a mobile device such as a mobile phone, tablet computer, or laptop computer.

### BRIEF DESCRIPTION OF THE DRAWINGS/FIGURES

Embodiments of the invention are described with reference to the accompanying drawings. In the drawings, like reference numbers indicate identical or functionally similar elements. Additionally, the left most digit(s) of a reference number identifies the drawing in which the reference number first appears.
FIG. 1 illustrates a block diagram of a NFC environment according to an exemplary embodiment of the invention;
FIG. 2 illustrates a block diagram of a conventional multiple-device NFC environment;
FIG. 3 illustrates a block diagram of a NFC device that may be used according to an exemplary embodiment of the invention;
FIG. 4 illustrates a block diagram of a memory module on an NFC device that may be used according to an exemplary embodiment of the invention; and
FIG. 5 is a flowchart of exemplary operational steps for identity selection on a multiple-identity supported NFC device, according to an exemplary embodiment of the invention.

The invention will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION OF THE INVENTION

The following Detailed Description refers to accompanying drawings to illustrate exemplary embodiments consistent with the invention. References in the Detailed Description to "one exemplary embodiment," "an exemplary embodiment," "an example exemplary embodiment," etc., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the scope of the invention. Therefore, the Detailed Description is not meant to limit the invention. Rather, the scope of the invention is defined only in accordance with the following claims

Embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

The following Detailed Description of the exemplary embodiments will so fully reveal the general nature of the invention that others can, by applying knowledge of those skilled in the relevant art(s), readily modify and/or adapt for various applications such exemplary embodiments, without undue experimentation, and without departing from the scope of the invention. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in the relevant art(s) in light of the teachings herein.

Although the description of the present invention is to be described in terms of NFC devices and NFC enable devices, those skilled in the relevant art(s) will recognize that the present invention may be applicable to other communications that use the near field and/or the far field without departing from the spirit and scope of the present invention. For example, although the present invention is to be described using NFC capable communication devices, those skilled in the relevant art(s) will recognize that functions of these NFC capable communication devices may be applicable to other communications devices that use the near field and/or the far field without departing from the spirit and scope of the present invention.

### EXEMPLARY NEAR FIELD COMMUNICATIONS (NFC) ENVIRONMENT

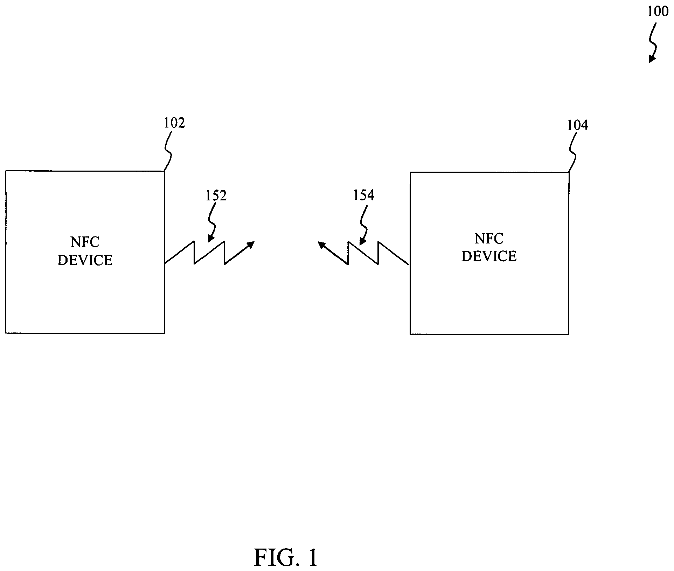

FIG. 1 illustrates a block diagram of a NFC environment according to an exemplary embodiment of the invention. A NFC environment 100 provides wireless communication of information, such as one or more commands and/or data, among a first NFC device 102 and a second NFC device 104 that are sufficiently proximate to each other. The first NFC device 102 and/or the second NFC device 104 may be implemented as a standalone or a discrete device or may be incorporated within or coupled to another electrical device or host device such as a mobile telephone, a portable computing device, another computing device such as a laptop, tablet computer, or a desktop computer, a computer peripheral such as a printer, a portable audio and/or video player, a payment system, a ticketing writing system such as a parking ticketing system, a bus ticketing system, a train ticketing system or an entrance ticketing system to provide some examples, or in a ticket reading system, a toy, a game, a poster, packaging, advertising material, a product inventory checking system and/or any other suitable electronic device that will be apparent to those skilled in the relevant art(s) without departing from the spirit and scope of the invention. Herein, when incorporated within or coupled to another electrical device or host device, this type of NFC device may be referred to as a NFC capable device.

The first NFC device 102 generates a magnetic field and probes the magnetic field for the second NFC device 104. The first NFC device 102 and the second NFC device 104 may be implemented using a Type A standard, a Type B standard, a Type F (FeliCa) standard, and/or a vicinity standard. The Type A and Type B standards are further defined in the "NFC Forum: NFC Activity Specification: Technical Specification, NFC Forum™ Activity 1.0 NFCForum-TS-Activity-1.0," published November 18, 2010 (hereinafter the "NFC Activity Specification") and/or ISO/IEC 14443-3, "Identification cards - Contactless integrated circuit(s) cards -Proximity cards -Part 3: Initialization and anticollision," published on June 11, 1999, which are incorporated herein by reference in their entirety. The Type F standard is further defined in the NFC Activity Specification. The Vicinity standard is further defined in ISO/IEC 15693-3:2009, "Identification cards - Contactless integrated circuit(s) cards - Vicinity cards - Part 3: Anti-collision and transmission protocol," published on April 6, 2009 (hereinafter the "Vicinity Specification").

Upon establishing communication with the second NFC device 104, the first NFC device 102 modulates its corresponding information onto the first carrier wave and generates the first magnetic field by applying the modulated information communication to a first antenna of the first NFC device to provide the first information communication 152. The first NFC device 102 continues to apply the first carrier wave without its corresponding information to continue to provide the first information communication 152 once the information has been transferred to the second NFC device 104. The first NFC device 102 is sufficiently proximate to the second NFC device 104 such that the first information communication 152 is inductively coupled onto a second antenna of the second NFC device 104.

The second NFC device 104 derives or harvests power from the first information communication 152 to recover, to process, and/or to provide a response to the information. The second NFC device 104 demodulates the first information communication 152 to recover and/or to process the information. The second NFC device 104 may respond to the information by applying its corresponding information to the first carrier wave that is inductively coupled onto the second antenna to provide the second modulated information communication 154.

Further operations of the first NFC device 102 and/or the second NFC device 104 may be described in International Standard ISO/IEC 18092:2004(E), "Information Technology - Telecommunications and Information Exchange Between Systems - Near Field Communication - Interface and Protocol (NFCIP-1)," published on April 1, 2004 and International Standard ISO/IEC 21481:2005(E), "Information Technology - Telecommunications and Information Exchange Between Systems - Near Field Communication - Interface and Protocol -2 (NFCIP-2)," published on January 15, 2005, each of which is incorporated by reference herein in its entirety.

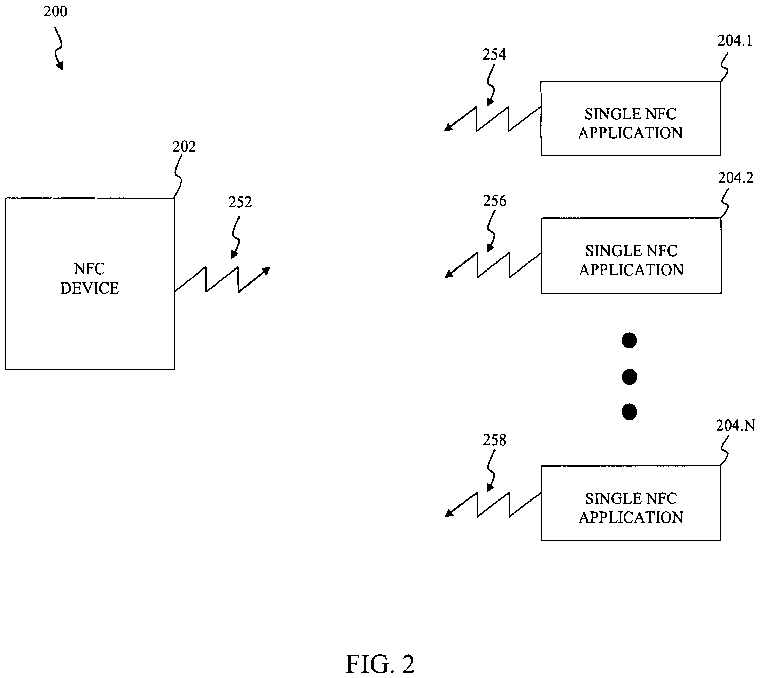

FIG. 2 illustrates a conventional multi-device environment. NFC environment 200 provides wireless communication of information, such as one or more commands and/or data, among a first NFC device 202 and a plurality of second NFC devices 204.1-204.N that are sufficiently proximate to the first NFC device 202. As indicated above for FIG. 1, the first NFC device 202 and/or the second NFC devices 204.1-204.N may be implemented as standalone or discrete devices or may be incorporated within or coupled to other electrical devices or host devices. In FIG. 2, each of the second NFC devices 204.1-204.N has a single identity associated with it, such as a ticket, credit card, identification, etc. These devices 204.1-204.N may be a plurality of NFC devices such as smart cards, tokens, and/or mobile computing devices kept within a wallet, purse, or similar portable item. There is no restriction on the number of second NFC devices 204.1-204.N that may be available to respond to the first NFC device 202, subject to practical limitations such as space.

In this environment, when first NFC device 202 polls for a second NFC device 204.1-204.N, each second NFC device 204.1-204.N responds if it is the type of NFC device which the first NFC device 202 has polled for. An example of the polling procedure is described in the NFC Activity Specification and "NFC Forum: NFC Digital Protocol: Technical Specification, NFC Forum™ Digital 1.0 NFCForum-TS-DigitalProtocol-1.0," published November 17, 2010 (hereinafter the "NFC Digital Protocol"), which are incorporated by reference herein in their entirety. The conventional polling procedure contemplates multiple standards, including the Type A standard, the Type B standard, and the Type F standard.

Typically, there is a certain probability that each second NFC device 204.1-204.N will respond at a different time; otherwise, a collision will occur. NFC Activity Specification and/or ISO/IEC 14443-3 and/or the Vicinity Specification provide for anticollision in such situations. Since each second NFC device 204.1-204.N has only one identity associated with it, they do not have any difficulty determining how to respond, and responding, to the first NFC device 202's poll when their identity matches.

### EXEMPLARY APPARATUS FOR IDENTITY SELECTION ON A MULTIPLE-IDENTITY DEVICE

It is also possible to emulate multiple identities on a single NFC device. Such a NFC device is a multiple-identity device, because it emulates multiple identities.

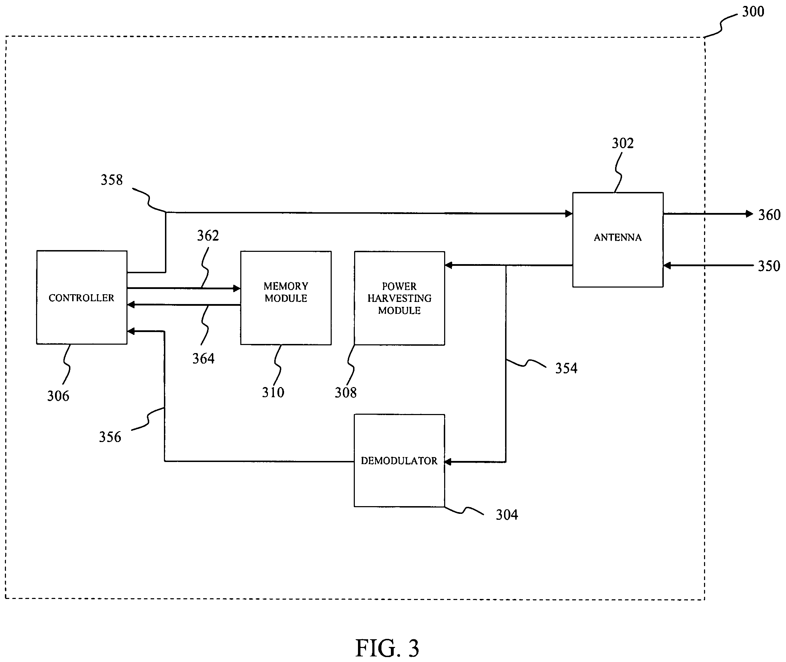

FIG. 3 illustrates a block diagram of a NFC device that may be used according to an exemplary embodiment of the invention. A NFC device 300 is configurable to operate in a target, or tag, mode of operation to respond to a polling command from a second NFC capable device, such as the NFC device 102 or the NFC device 104 to provide some examples, in a polling mode of operation. The NFC device 300 may represent a NFC tag or a NFC communicator. A NFC reader is a type of NFC device that is capable of operating in an initiator mode to initiate a communication with another NFC enabled device. A NFC tag is a type of NFC device that is capable operating in the target mode to respond to the initiation of a communication by another NFC enabled device. A NFC communicator is a type of NFC device that is capable of operating in the initiator mode or in the target mode and is capable of switching between these two modes.

The NFC device 300 may represent a standalone or a discrete device or may represent a NFC capable device. Since the second NFC capable device may be configured substantially similarly to the NFC device 300, the following description focuses on describing the NFC device 300. The NFC device 300 may have a plurality of identities associated with it, such as a ticket, credit card, identification, etc. The NFC device 300 includes an antenna module 302, a demodulator module 304, a controller module 306, a power harvesting module 308, and a memory module 310. The NFC device 300 may represent an exemplary embodiment of the NFC device 104.

The antenna module 302 inductively receives a communications signal 350 from the second NFC capable device to provide a recovered communications signal 354. Typically, the received communications signal 350 includes a polling command that has been modulated by the second NFC capable device.

The demodulator module 304 demodulates the recovered communications signal 354 using any suitable analog or digital modulation technique to provide a recovered command 356. The recovered command 356 may be the polling command. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM) and/or any other suitable modulation technique that will be apparent to those skilled in the relevant art(s).

When the demodulator module 304 is within a Type A tag, it detects polling commands based on 100% ASK modulation. The voltage amplitude must drop substantially to zero, such that the demodulator module 304 functions as a gap detector for Type A tags. In this situation, any modulation based on another modulation scheme that does not drop below the threshold required for Type A tags may be given the digital value of 1. When the amplitude drops low enough, the demodulator module 304 gives it the digital value of 0 in accord with the modified Miller coding scheme.

When the demodulator module 304 is within a Type B tag, it detects polling commands based on 10% ASK modulation. The demodulator module 304 has a voltage threshold that is at 90% of the total modulation amplitude. If the polling command's modulation decreases below that threshold, the demodulator module 304 gives it the digital value of 0 in accord with the NRZ-L coding scheme. In this situation, any modulation based on another protocol may drop below the threshold required for Type B tags and therefore be given the digital value of 0. Any modulation that remains above this threshold would be given the digital value of 1.

When the demodulator module 304 is within a Type F tag, it detects polling commands based on a Manchester coding scheme that uses a modulation threshold between that used for Type A and that used for Type B tags. If the polling command's modulation decreases below this threshold, it will be given the digital value of 0. Any modulation that remains above this threshold would be given the digital value of 1.

As can be seen from the above, a Type A tag will not assign a digital value of 0 to any modulation based on Type B or Type F tags because the modulation amplitude would not fall below the threshold required for 100% ASK modulation. Thus, the demodulator module 304 in a Type A tag would not detect a polling command sent to detect a Type B or Type F tag.

When the demodulator module 304 is within a Vicinity standard tag, it detects polling commands based on either 10% or 100% ASK modulation, depending on the choice of modulation by the reader. When using 100% ASK modulation, the voltage amplitude must drop substantially to zero, such that the demodulator module 304 functions as a gap detector for Vicinity standard tags. In this situation, any modulation based on another modulation scheme that does not drop below the threshold required for Vicinity standard tags may be given the digital value of 1. When the amplitude drops low enough, the demodulator module 304 gives it the digital value of 0 in accord with pulse position modulation.

When using 10% ASK modulation with the Vicinity standard, the demodulator module 304 has a voltage threshold that is at 90% of the total modulation amplitude. If the polling command's modulation decreases below that threshold, the demodulator module 304 gives it the digital value of 0 in accord with the pulse position modulation coding scheme. In this situation, any modulation based on another protocol may drop below the threshold required for Vicinity standard tags and therefore be given the digital value of 0. Any modulation that remains above this threshold would be given the digital value of 1.

Moving on to other aspects of the NFC device 300, the controller module 306 controls overall operation and/or configuration of the NFC device 300. The controller module 306 sends a list search command 362 to the memory module 310 when the NFC device 300 supports a plurality of identities. The control module 306 receives list search response 364 with the first identity that matches the polling command characteristic(s). The controller module 306 then provides a response 358 to the recovered command 356, which incorporates list search response 364 when responding to a polling command.

Typically, the second NFC capable device inductively couples a carrier wave on the antenna module 302 as the received communications signal 350 after it has transferred the polling command to the NFC device 300. The controller module 306 modulates this carrier wave in accordance with the response 358 to provide a transmitted communications signal 360. For example, an impedance of the antenna module 302 varies based upon the response 358 to vary a load of the NFC device 300 as seen by the second NFC capable device.

The power harvesting module 308 may harvest power for the NFC device 300 from the recovered communications signal 354. The power couplings from the power harvesting module 308 that supply the power to other modules of the NFC device 300, such as the antenna module 302, the demodulator module 304, the controller module 306, and/or the memory module 310, are not shown in FIG. 3. Alternatively or additionally, a battery can be provided.

The memory module 310 stores a list of the plurality of identities associated with the NFC device 300. When the received communications signal 350 is a polling command which has been modulated from the second NFC capable device, the memory module 310 receives the list search command 362 in order to search the list of the plurality of identities associated with the NFC device 300. Once a match to the characteristics of the polling command is found, the memory module 310 returns the corresponding identity as list search response 364. For example, this match may represent a first identity from among the plurality of identities that matches to the characteristics of the polling command, referred to as a first match.

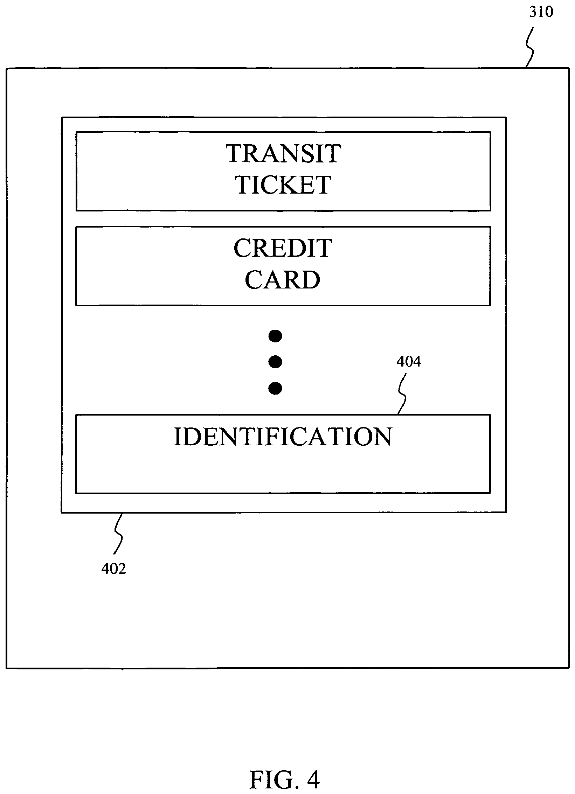

FIG. 4 illustrates in more detail a block diagram of the memory module 310 on an NFC device 300 that may be used according to an exemplary embodiment of the invention. Memory module 310 includes list 402. List 402 maintains a list of the plurality of identities 404 associated with the NFC device 300. Memory module 310 may be any suitable type, such as but not limited to, read only memory (ROM), random access memory (RAM), magnetic disk storage media, optical storage media, and flash memory.

The plurality of identities 404 includes the NFC (or similar) type standard (Type A, Type B, Type F, proprietary, or Vicinity standard). The plurality of identities 404 associated with the NFC device 300 may additionally include a mass transit ticket, bus ticket, airplane ticket, credit card, loyalty card, access key, user identification, or any combination of these identities and any other identities that a NFC device may be used for. The plurality of identities 404 may be further defined by other characteristics, such as restrictions on what identities or types of identities may be selected according to the time of day or Global Positioning System (GPS) location, the dollar amount of a potential transaction, a user requirement of manual identity selection, or any combination of these and other characteristics as will be recognized by those skilled in the relevant art(s).

The Type A standard typically does not include any additional identifying information regarding what kind of target the second NFC capable device seeks. Thus, when NFC device 300 receives a polling command configured according to the Type A standard, it will search for the first identity in the list 402 that uses the Type A standard, without searching for any other characteristics.

The Type B standard includes an application family identifier in the polling command. The application family identifier may be set to poll for all devices within range that operate using the Type B standard, sometimes referred to as a wildcard. Otherwise, the application family identifier indicates a particular family characteristic alone or additionally with a subfamily identifier. Thus, when the NFC device 300 receives a polling command configured according to the Type B standard, one of several options results. Where the application family identifier is set as a wildcard, it will search for the first identity in the list 402 that uses the Type B standard. If the application family identifier includes family/subfamily identifiers, the NFC device 300 will particularly search for the first identity in the list 402 that contains all of the specified characteristics.

The specified characteristics may, for example, mirror the plurality of targets listed above, such as a mass transit ticket, bus ticket, airplane ticket, credit card, loyalty card, access key, user identification, restrictions on what identities or types of identities may be selected according to the time of day or Global Positioning System (GPS) location, the dollar amount of a potential transaction, a user requirement of manual identity selection, or any combination of these and other characteristics.

The Type F standard may include a system code in the polling command. As with the Type B standard, the system code may be set as a wildcard so that any device operating using the Type F standard will respond. Otherwise, the system code may be configured to indicate a specific configuration of characteristics which the second NFC capable device seeks in a target. Thus, when the NFC device 300 receives a polling command configured according to the Type F standard in a non-wildcard configuration, the NFC device 300 will search for the first identity in the list 402 that contains the characteristics indicated in the system code of the polling command. The characteristics may, for example, be those listed above under the Type B standard.

The Vicinity standard, like the Type B standard, includes an application family identifier in the polling command. The application family identifier may be set to poll for all devices within range that operate using the Vicinity standard, sometimes referred to as a wildcard. Otherwise, the application family identifier indicates a particular family characteristic alone or additionally with a subfamily identifier. Thus, when the NFC device 300 receives a polling command configured according to the Vicinity standard, one of several options results. Where the application family identifier is set as a wildcard, it will search for the first identity in the list 402 that uses the Vicinity standard. If the application family identifier includes family/subfamily identifiers, the NFC device 300 will particularly search for the first identity in the list 402 that contains all of the specified characteristics.

As indicated previously, the plurality of identities 404 may be defined by additional characteristics beyond the NFC type standard. The restriction based on time of day may be configured, for example, such that a proprietary application family identifier under the Type B standard or Vicinity standard, or a system code under the Type F standard includes the time the polling command was sent. The NFC device 300 may be configured by the user such that, when the NFC device 300 receives the polling command with this characteristic, it will select one identity from the list 402 at a first time of the day and another identity from the list 402 at another time of the day. For example, the NFC device 300 may be user-configured to emulate a transit ticket during a first time of day and a credit card for all other times of day.

The restriction based on location may be configured such that a proprietary application family identifier under the Type B standard or Vicinity standard, or a system code under the Type F standard, includes the GPS location of the second NFC capable device that sent the polling command. Thus, a user may configure the NFC device 300 to use only a particular emulated credit card, ticket, or identification at a certain GPS location. When the NFC device then receives a polling command from the second NFC capable device that includes the GPS location as a characteristic, the NFC device 300 will select the first identity from the list 402 that matches the NFC type standard and GPS location.

The restriction based on dollar amount may be configured such that a proprietary application family identifier under the Type B standard or Vicinity standard, or a system code under the Type F standard, includes a dollar amount of a proposed transaction in the polling command sent by the second NFC capable device. Such a situation might arise at a retail location, for example. A user may configure the NFC device 300 to use only a particular emulated credit card for a first specified dollar range, another emulated credit card for a second dollar range, and refuse the proposed transaction when in a third dollar range. Thus, when the NFC device 300 receives a polling command from the second NFC capable device that includes a dollar amount as a characteristic, NFC device 300 will select the first identity from the list 402 that matches the NFC type standard and includes the dollar amount in its user-defined range.

### EXEMPLARY METHOD FOR NFC DEVICE SELECTION

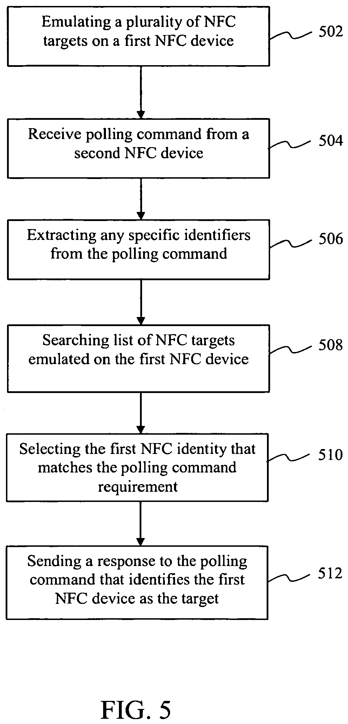

FIG. 5 is a flowchart of exemplary operational steps for identity selection on a multiple-identity supported NFC device, according to an exemplary embodiment of the invention. The invention is not limited to this operational description. Rather, it will be apparent to persons skilled in the relevant art(s) from the teachings herein that other operational steps are within the scope and spirit of the present invention. The following discussion describes the steps in FIG. 5.

At step 502, a first NFC device emulates a plurality of targets by maintaining an identity for each target. Each identity is stored as an application in a memory module of the first NFC device. In particular, and as shown in FIG. 4, the plurality of identities are stored in a list on the memory module of the NFC device.

At step 504, the first NFC device receives a polling command from a second NFC device that is operating as a reader. This polling command may be configured, for example, as Type A, Type B, Type F, or Vicinity. When the polling command is configured as a Type B or Vicinity standard command, it may include special application family identifiers to indicate any characteristics of a particular type of tag that the second NFC device is searching for. Similarly, when the polling command is configured as a Type F command, it may include additional identifying characteristics in a system code that the second NFC device is searching for.

At step 506, the first NFC device decodes the polling command and extracts any specific identifying characteristics that the second NFC device is searching for, if any, as described for Type B, Type F, and Vicinity commands above. As a minimum, where no additional identifying characteristics are included, the first NFC device identifies the standard used (Type A, Type B, Type F, Vicinity, or proprietary).

At step 508, the first NFC device searches the list in its memory module for a match to the identifying characteristic(s) extracted from the polling command in step 506.

At step 510, the first NFC device selects the first NFC identity in the list that matches the polling command characteristic(s) required by the polling command. Where the only characteristic extracted from the polling command is the standard used (Type A, Type B, Type F, Vicinity), for example, the NFC device will select the first identity in the list that operates on that standard. Where there are additional characteristics extracted from the polling command, the NFC device will select the first identity that matches all the characteristics.

Alternatively, the NFC device will randomly select the identity from all the identities that match all the characteristics. The NFC device may also use any other selection criteria as may be known in the relevant art(s) to determine which identity it will select at this step.

At step 512, the first NFC device sends a response to the polling command and identifies itself as the emulated target whose identity was selected in step 510. The first and second NFC devices then continue to establish a link as is known in the relevant art(s).

If there is not a match to the characteristic(s) extracted from the polling command, the second NFC device may broaden its poll by eliminating some or all of the narrowing characteristic(s), or it may conclude that there are no matching devices in range with which it seeks to communicate.

### CONCLUSION

It is to be appreciated that the Detailed Description section, and not the Abstract section, is intended to be used to interpret the claims. The Abstract section may set forth one or more, but not all exemplary embodiments, of the invention, and thus, is not intended to limit the invention and the appended claims in any way.

The invention has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the scope of the invention. Thus the invention should not be limited by any of the above-described exemplary embodiments, but should be defined only in accordance with the following claims

## Claims

1. A Near Field Communication (NFC)-enabled device (102, 104, 300) comprising:
a demodulator (304) configured to extract a polling command from a polling signal (354) received from a NFC device (102, 104, 300), the polling command including one or more characteristic; and
a memory (310) configured to store a list of a plurality of NFC targets; and
a processor configured to search the list to select a first NFC target from among the plurality of NFC targets that first matches the one or more characteristic included in the polling command; wherein
the one or more characteristic comprises an identity restriction on which a NFC target emulated on the NFC-enabled device (102, 104, 300) is selected.

2. The NFC-enabled device (102, 104, 300) of claim 1, wherein the plurality of NFC targets comprises an electronic ticket, a credit card, or identification.

3. The NFC-enabled device (102, 104, 300) of claim 2, wherein:
the electronic ticket comprises a bus ticket, an airplane ticket, a mass transit ticket, or a parking ticket;
the credit card comprises a card issued by a merchant, bank, or credit agency; and
the identification comprises a government-issued identification.

4. The NFC-enabled device (102, 104, 300) of claim 1, wherein the one or more characteristic is a format of the polling command.

5. The NFC-enabled device (102, 104, 300) of claim 4, wherein the format of the polling command complies with a Type A NFC standard;
a Type B NFC standard, wherein the polling command comprises an application family identifier that indicates the one or more characteristic that the NFC device (102, 104, 300) targets;
a Type F NFC standard, wherein the polling command comprises a system code that indicates the one or more characteristic that the NFC device (102, 104, 300) targets; or
a Vicinity standard, wherein the polling command comprises an application family identifier that indicates the one or more characteristic that the NFC device (102, 104, 300) targets.

6. The NFC-enabled device (102, 104, 300) of claim 1, wherein the one or more characteristic is an electronic ticket, wherein the electronic ticket comprises a bus ticket, an airplane ticket, a mass transit ticket, or a parking ticket.

7. The NFC-enabled device (102, 104, 300) of claim 1, wherein the one or more characteristic is a credit card, wherein the credit card comprises a card issued by a merchant, bank, or credit agency.

8. The NFC-enabled device (102, 104, 300) of claim 1, wherein the one or more characteristic is a loyalty card, wherein the loyalty card comprises a card issued by a merchant.

9. The NFC-enabled device (102, 104, 300) of claim 1, wherein the identity restriction comprises a restriction on which a NFC target emulated on the NFC-enabled device (102, 104, 300) is selected depending on a time of day, or a restriction on which the emulated NFC target is selected depending on a Global Positioning System (GPS) location.

10. The NFC-enabled device (102, 104, 300) of claim 1, wherein the one or more characteristic comprises a restriction on which a NFC target emulated on the NFC-enabled device (102, 104, 300) is selected for a financial transaction above or below a user-defined amount.

11. The NFC-enabled device (102, 104, 300) of claim 1, wherein the one or more characteristic is an identification, wherein the identification comprises a government-issued identification.

12. The NFC-enabled device (102, 104, 300) of claim 1, wherein the processor is further configured to select a NFC target that matches a plurality of characteristics included in the polling command.

13. The NFC-enabled device (102, 104, 300) of claim 1, wherein the NFC-enabled device (102, 104, 300) is a mobile device such as a mobile phone, tablet computer, or laptop computer.

14. A method for selecting a Near Field Communication (NFC) target, comprising:
emulating (502) a plurality of NFC targets on a first NFC device (102, 104, 300); and
receiving (504) a polling command from a second NFC device (102, 104, 300); and
searching (508) a list of the plurality of NFC targets on the first NFC device (102, 104, 300) for a NFC target that matches one or more characteristic of the polling command;
selecting (510) the NFC target in the list that first matches the one or more characteristic; wherein
the one or more characteristic comprises an identity restriction on which a NFC target emulated on the NFC-enabled device (102, 104, 300) is selected.

15. The method of claim 14, further comprising:
extracting (506) the one or more characteristic that is encoded in the polling command that identifies a type of NFC target requested by the second NFC device (102, 104, 300); and
sending (512) a response to the second NFC device (102, 104, 300) that identifies the first NFC device (102, 104, 300) as the NFC target selected from the list that first matches the one or more characteristic.

## Patentansprüche

1. Nahfeldkommunikations- bzw. Near Field Communication (NFC) - fähiges Gerät (102, 104, 300), das aufweist:
einen Demodulator (304), der dazu konfiguriert ist, einen Datenabrufbefehl aus einem Datenabrufsignal (354), das von einem NFC-Gerät (102, 104, 300) empfangen wird, zu extrahieren, wobei der Datenabrufbefehl eine oder mehrere Eigenschaften aufweist; und
einen Speicher (310), der dazu konfiguriert ist, eine Liste einer Vielzahl von NFC-Zielen zu speichern; und
einen Prozessor, der dazu konfiguriert ist, die Liste zu durchsuchen, um ein erstes NFC-Ziel aus der Vielzahl von NFC-Zielen auszuwählen, das als erstes mit der einen oder den mehreren Eigenschaften, die in dem Datenabrufbefehl enthalten sind, übereinstimmt; wobei die eine oder die mehreren Eigenschaften eine Identitätsbeschränkung aufweisen, nach der ein NFC-Ziel, das auf dem NFC-fähigen Gerät (102, 104, 300) nachgebildet wird, ausgewählt wird.

2. NFC-fähiges Gerät (102, 104, 300) nach Anspruch 1, wobei die Vielzahl von NFC-Zielen ein elektronisches Ticket, eine Kreditkarte oder einen Ausweis aufweisen.

3. NFC-fähiges Gerät (102, 104, 300) nach Anspruch 2, wobei:
das elektronische Ticket ein Busticket, ein Flugticket, ein Massenverkehrsmittel-Ticket oder ein Parkticket aufweist;
die Kreditkarte eine Karte aufweist, die von einem Händler, einer Bank oder einer Kreditagentur ausgegeben wurde; und
der Ausweis einen von einer Regierung ausgestellten Ausweis aufweist.

4. NFC-fähiges Gerät (102, 104, 300) nach Anspruch 1, wobei die eine oder die mehreren Eigenschaften ein Format des Datenabrufbefehls sind.

5. NFC-fähiges Gerät (102, 104, 300) nach Anspruch 4, wobei das Format des Datenabrufbefehls einem NFC-Standard des Typs A entspricht;
einem NFC-Standard des Typs B, wobei der Datenabrufbefehl eine Anwendungsfamilienkennung aufweist, die die eine oder die mehreren Eigenschaften angibt, auf die das NFC-Gerät (102, 104, 300) abzielt;
einem NFC-Standard des Typs F, wobei der Datenabrufbefehl einen Systemcode aufweist, der die eine oder die mehreren Eigenschaften angibt,
auf die das NFC-Gerät (102, 104, 300) abzielt; oder
einem Nachbarschaftsstandard, wobei der Datenabrufbefehl eine Anwendungsfamilienkennung aufweist, die die eine oder die mehreren Eigenschaften angibt, auf die das NFC-Gerät (102, 104, 300) abzielt.

6. NFC-fähiges Gerät (102, 104, 300) nach Anspruch 1, wobei die eine oder die mehreren Eigenschaften ein elektronisches Ticket sind, wobei das elektronische Ticket ein Busticket, ein Flugticket, ein Massenverkehrsmittel-Ticket oder ein Parkticket aufweist.

7. NFC-fähiges Gerät (102, 104, 300) nach Anspruch 1, wobei die eine oder die mehreren Eigenschaften eine Kreditkarte sind, wobei die Kreditkarte eine Karte aufweist, die von einem Händler, einer Bank oder einer Kreditagentur ausgegeben wurde.

8. NFC-fähiges Gerät (102, 104, 300) nach Anspruch 1, wobei die eine oder die mehreren Eigenschaften eine Treuekarte sind, wobei die Treuekarte eine Karte aufweist, die von einem Händler ausgegeben wurde.

9. NFC-fähiges Gerät (102, 104, 300) nach Anspruch 1, wobei die Identitätsbeschränkung eine Beschränkung aufweist, nach der ein auf dem NFC-fähigen Gerät (102, 104, 300) nachgebildetes NFC-Ziel abhängig von einer Tageszeit ausgewählt wird, oder eine Beschränkung, nach der das nachgebildete NFC-Ziel in Abhängigkeit von einem Global Positioning System (GPS) -Standort ausgewählt wird.

10. NFC-fähiges Gerät (102, 104, 300) nach Anspruch 1, wobei die eine oder die mehreren Eigenschaften eine Beschränkung aufweisen, nach der ein auf dem NFC-fähigen Gerät (102, 104, 300) nachgebildetes NFC-Ziel für eine Finanztransaktion über oder unter einem benutzerdefinierten Betrag ausgewählt wird.

11. NFC-fähiges Gerät (102, 104, 300) nach Anspruch 1, wobei die eine oder die mehreren Eigenschaften ein Ausweis sind, wobei der Ausweis einen von einer Regierung ausgestellten Ausweis aufweist.

12. NFC-fähiges Gerät (102, 104, 300) nach Anspruch 1, wobei der Prozessor des Weiteren dazu konfiguriert ist, ein NFC-Ziel auszuwählen, das mit einer Vielzahl von Eigenschaften übereinstimmt, die in dem Datenabrufbefehl enthalten sind.

13. NFC-fähiges Gerät (102, 104, 300) nach Anspruch 1, wobei das NFCfähige Gerät (102, 104, 300) ein mobiles Gerät, wie zum Beispiel ein Mobiltelefon, ein Tablet Computer oder ein Laptop Computer, ist.

14. Verfahren zum Auswählen eines Nahfeldkommunikations- bzw. Near Field Communication (NFC) -Ziels, das umfasst:
Nachbilden (502) einer Vielzahl von NFC-Zielen auf einem ersten NFC-Gerät (102, 104, 300); und
Empfangen (504) eines Datenabrufbefehls von einem zweiten NFC-Gerät (102, 104, 300); und
Durchsuchen (508) einer Liste der Vielzahl von NFC-Zielen auf dem ersten NFC-Gerät (102, 104, 300) hinsichtlich eines NFC-Ziels, das mit einer oder mehreren Eigenschaften des Datenabrufbefehls übereinstimmt;
Auswählen (510) des NFC-Ziels in der Liste, das als erstes mit der einen oder den mehreren Eigenschaften übereinstimmt;
wobei die eine oder die mehreren Eigenschaften eine Identitätsbeschränkung aufweisen, nach der ein NFC-Ziel, das auf dem NFC-fähigen Gerät (102, 104, 300) nachgebildet wird, ausgewählt wird.

15. Verfahren nach Anspruch 14, das des Weiteren umfasst:
Extrahieren (506) der einen oder der mehreren Eigenschaften, die in dem Datenabrufbefehl codiert ist/sind, die einen Typ des NFC-Ziels identifizieren, der von dem zweiten NFC-Gerät (102, 104, 300) angefordert wird; und
Senden (512) einer Antwort an das zweite NFC-Gerät (102, 104, 300), die das erste NFC-Gerät (102, 104, 300) als das aus der Liste ausgewählte NFC-Ziel identifiziert, das als erstes mit der einen oder den mehreren Eigenschaften übereinstimmt.

## Revendications

1. Dispositif (102, 104, 300) compatible avec la communication en champ proche (NFC) comprenant :
un démodulateur (304) conçu pour extraire une commande d'interrogation d'un signal d'interrogation (354) reçu d'un dispositif NFC (102, 104, 300), la commande d'interrogation comprenant une ou plusieurs caractéristiques ; et
une mémoire (310) conçue pour stocker une liste d'une pluralité de cibles NFC ; et
un processeur conçu pour effectuer une recherche dans la liste afin de sélectionner une première cible NFC parmi la pluralité de cibles NFC qui correspond en premier lieu à ladite une ou auxdites plusieurs caractéristiques incluses dans la commande d'interrogation ; dans lequel
ladite une ou lesdites plusieurs caractéristiques comprennent une restriction d'identité sur laquelle est sélectionnée une cible NFC émulée sur le dispositif compatible NFC (102, 104, 300).

2. Dispositif (102, 104, 300) compatible NFC selon la revendication 1, dans lequel la pluralité de cibles NFC comprend un billet électronique, une carte de crédit ou une identification.

3. Dispositif (102, 104, 300) compatible NFC selon la revendication 2, dans lequel :
le billet électronique comprend un ticket de bus, un billet d'avion, un titre de transport en commun ou un ticket de stationnement ;
la carte de crédit comprend une carte émise par un commerçant, une banque ou une agence de crédit ; et
l'identification comprend une identification émise par le gouvernement.

4. Dispositif (102, 104, 300) compatible NFC selon la revendication 1, dans lequel ladite une ou lesdites plusieurs caractéristiques sont un format de la commande d'interrogation.

5. Dispositif (102, 104, 300) compatible NFC selon la revendication 4, dans lequel le format de la commande d'interrogation est conforme à une norme NFC de type A ;
une norme NFC de type B, dans laquelle la commande d'interrogation comprend un identifiant de famille d'applications qui indique ladite une ou lesdites plusieurs caractéristiques que cible le dispositif NFC (102, 104, 300) ;
une norme NFC de type F, dans laquelle la commande d'interrogation comprend un code système qui indique ladite une ou lesdites plusieurs caractéristiques que cible le dispositif NFC (102, 104, 300) ; ou
une norme de voisinage, dans laquelle la commande d'interrogation comprend un identifiant de famille d'applications qui indique ladite une ou lesdites plusieurs caractéristiques que cible le dispositif NFC (102, 104, 300).

6. Dispositif (102, 104, 300) compatible NFC selon la revendication 1, dans lequel ladite une ou lesdites plusieurs caractéristiques sont un billet électronique, dans lequel le billet électronique comprend un ticket de bus, un billet d'avion, un titre de transport en commun ou un ticket de stationnement.

7. Dispositif (102, 104, 300) compatible NFC selon la revendication 1, dans lequel ladite une ou lesdites plusieurs caractéristiques sont une carte de crédit, dans lequel la carte de crédit comprend une carte émise par un commerçant, une banque ou une agence de crédit.

8. Dispositif (102, 104, 300) compatible NFC selon la revendication 1, dans lequel ladite une ou lesdites plusieurs caractéristiques sont une carte de fidélité, dans lequel la carte de fidélité comprend une carte émise par un commerçant.

9. Dispositif (102, 104, 300) compatible NFC selon la revendication 1, dans lequel la restriction d'identité comprend une restriction sur laquelle une cible NFC émulée sur le dispositif compatible NFC (102, 104, 300) est sélectionnée en fonction d'un moment du jour, ou une restriction sur laquelle la cible NFC émulée est sélectionnée en fonction d'un emplacement de système de positionnement global (GPS).

10. Dispositif (102, 104, 300) compatible NFC selon la revendication 1, dans lequel ladite une ou lesdites plusieurs caractéristiques comprennent une restriction sur laquelle une cible NFC émulée sur le dispositif compatible NFC (102, 104, 300) est sélectionnée pour une transaction financière au-dessus ou en dessous d'un montant défini par l'utilisateur.

11. Dispositif (102, 104, 300) compatible NFC selon la revendication 1, dans lequel ladite une ou lesdites plusieurs caractéristiques sont une identification, dans lequel l'identification comprend une identification émise par le gouvernement.

12. Dispositif (102, 104, 300) compatible NFC selon la revendication 1, dans lequel le processeur est en outre conçu pour sélectionner une cible NFC qui correspond à une pluralité de caractéristiques incluses dans la commande d'interrogation.

13. Dispositif (102, 104, 300) compatible NFC selon la revendication 1, dans lequel le dispositif (102, 104, 300) compatible NFC est un dispositif mobile tel qu'un téléphone mobile, une tablette ou un ordinateur portable.

14. Procédé de sélection d'une cible de communication en champ proche (NFC), comprenant :
l'émulation (502) d'une pluralité de cibles NFC sur un premier dispositif NFC (102, 104, 300) ; et
la réception (504) d'une commande d'interrogation provenant d'un deuxième dispositif NFC (102, 104, 300) ; et
la recherche (508) dans une liste de la pluralité de cibles NFC sur le premier dispositif NFC (102, 104, 300) pour trouver une cible NFC qui correspond à une ou plusieurs caractéristiques de la commande d'interrogation ;
la sélection (510) de la cible NFC dans la liste qui correspond en premier à ladite une ou auxdites plusieurs caractéristiques ; dans lequel
ladite une ou lesdites plusieurs caractéristiques comprennent une restriction d'identité sur laquelle est sélectionnée une cible NFC émulée sur le dispositif compatible NFC (102, 104, 300).

15. Procédé selon la revendication 14, comprenant en outre :
l'extraction (506) de ladite une ou desdites plusieurs caractéristiques qui sont codées dans la commande d'interrogation qui identifient un type de cible NFC demandé par le deuxième dispositif NFC (102, 104, 300) ; et
l'envoi (512) d'une réponse au deuxième dispositif NFC (102, 104, 300) qui identifie le premier dispositif NFC (102, 104, 300) en tant que cible NFC sélectionnée dans la liste qui correspond en premier à ladite une ou auxdites plusieurs caractéristiques.
